Europäisches Patentamt

European Patent Office

Office européen des brevets

(19)

(11) **EP 0 443 679 B1**

## (12) FASCICULE DE BREVET EUROPEEN

(45) Date de publication et mention
de la délivrance du brevet:
**09.12.1998 Bulletin 1998/50**

(51) Int Cl.$^6$: **G06F 7/72**

(21) Numéro de dépôt: **91200332.4**

(22) Date de dépôt: **18.02.1991**

(54) **Procédé de calcul d'une opération du type A.X modulo N, dans un procédé de codage selon une méthode de type RSA**

Verfahren zur Berechnung einer Operation des Typus A.X modulo N, in einem Kodierverfahren gemäss der RSA-Methode

Method of calculating an operation of the type A.X modulo N in a coding method according to the RSA method

(84) Etats contractants désignés:
**DE FR GB**

(30) Priorité: **23.02.1990 FR 9002274**

(43) Date de publication de la demande:
**28.08.1991 Bulletin 1991/35**

(73) Titulaire: **Koninklijke Philips Electronics N.V.
5621 BA Eindhoven (NL)**

(72) Inventeur: **Quisquater, Jean-Jacques
F-75008 Paris (FR)**

(74) Mandataire: **Charpail, François et al
Société Civile S.P.I.D.
156, Boulevard Haussmann
75008 Paris (FR)**

(56) Documents cités:
    EP-A- 0 208 238        EP-A- 0 258 051
    DE-A- 3 138 698       FR-A- 2 613 861

- ELECTRONICS LETTERS, vol. 23, no. 15, 16 juillet 1987, pages 794-795, Stevenage, Herts, GB; P.W. BAKER: "Fast computation of A * B modulo N"
- COMPCON 1982, Washington, 20th - 23rd September 1982, pages 672-678, IEEE, New York, US; S. MIYAGUCHI: "Fast encryption algorithm for the RSA cryptographic system"

## Description

La présente invention concerne un procédé de calcul d'une opération du type A.X modulo N, dans un procédé de codage selon une méthode de type RSA pour chiffrer/déchiffrer un message de données numériques M dans un format à n bits par une exponentiation modulo N dudit message, N étant un entier à n bits, décomposée en une suite de telles opérations, où A et X sont des variables de calcul dépendantes du message numérique M, comprenant:

- une étape préliminaire pour initialiser une variable de totalisation T et fractionner la variable de calcul A en tranches ai de m bits, prises dans l'ordre décroissant de poids de A, i servant d'indice d'itération dans les étapes suivantes,
- une étape d'accumulation où l'on place sous une variable Bi le produit de la tranche ai par la variable de calcul X ajouté à la variable de totalisation T cadrée par le facteur 2 exp(m),
- une étape de réduction modulo N pour réduire d'un multiple de N la longueur de la variable Bi par application d'un quotient q, laissant un reste R, le résultat étant placé sous la variable T.

La méthode de codage dite RSA, du nom de ses inventeurs, est connue notamment du document US 4 405 829. Les avantages de cette méthode, notamment le fait qu'elle soit du type : à clé publique, sont également bien connus. Sa mise en oeuvre au moyen de calculateurs puissants, dotés de mémoires suffisantes pour stocker des nombres de grande longueur, ne pose pas de difficultés particulières. Il en va autrement lorsqu'on cherche à exploiter la même méthode au moyen de systèmes de très petite taille, et en particulier au moyen de circuits semiconducteurs intégrés du genre microcontrôleur, susceptibles d'être incorporés dans une carte portative dite carte intelligente ou encore carte à puce. Etant donné que l'on prévoit de nombreuses applications possibles et utiles de ce genre de dispositif dans le domaine de la transmission privée (authentification d'un interlocuteur, signature, échange de clés, transfert de fonds confidentiels, monnaie électronique etc...) des recherches importantes sont entreprises actuellement dans ce domaine. Elles ont pour but d'obtenir un procédé et des moyens de mise en oeuvre de la méthode de codage RSA qui réussiraient à accomplir le traitement des données dans un temps raisonnable (au plus de l'ordre de la seconde), malgré les limitations sérieuses entraînées par l'emploi d'un dispositif intégré réalisé selon les technologies actuelles.

Au titre des limitations d'ordre technologique des dispositifs actuels on peut citer la faible capacité mémoire (quelques centaines d'octets), la vitesse d'horloge limitée (de l'ordre de 8 MHz seulement) et le faible nombre de bits traités en parallèle (8 ou 16 bits seulement).

Des procédés pour la mise en oeuvre par un microcontrôleur de la méthode de codage RSA qui est conforme au paragraphe introductif, sont décrits dans les documents COMPCON'82 IEEE, 20 septembre, pages 672-678 et FR-A 2 613 861.

L'algorithme de traitement, tel qu'il y est décrit, évite d'avoir à effectuer des calculs sur des nombres de grande longueur et utilise à cette fin un fractionnement des variables de calcul et une réduction modulo N après chaque multiplication partielle, de manière à éviter un accroissement de la longueur de ces variables au fur et à mesure d'un traitement poursuivi séquentiellement.

Un inconvénient important des procédés connus réside dans le fait qu'à chaque étape de réduction modulo N, un test de signe est nécessaire, qui détermine si la soustraction du multiple de N a été excessive, auquel cas une addition de N sera opérée pour redonner une valeur positive à la variable de calcul A. Un tel inconvénient n'est d'ailleurs pas limité au cas de l'algorithme connu du document cité plus haut, mais se retrouve de manière générale, dans l'état actuel de la technique.

Tandis que les opérations arithmétiques peuvent être exécutées à grande vitesse par une cellule de calcul spécialisée, associée en parallèle à une unité centrale de gestion du programme, des opérations de test de signe ne peuvent être exécutées que par l'unité centrale, et le fonctionnement de la cellule doit alors être interrompu en attendant le résultat du test.

Le ralentissement du traitement dû aux opérations de test en question est d'autant plus significatif qu'il doit intervenir un très grand nombre de fois pendant le calcul d'exponentiation modulo N, et que le temps de cycle opératoire de l'unité centrale est comparativement lent par rapport au temps de cycle opératoire de la cellule de calcul, typiquement dans un rapport de 8 à 1.

Aussi, l'invention a-t-elle pour but de proposer un procédé permettant l'exécution d'un codage par la méthode RSA au moyen d'un microcontrôleur muni d'une cellule de calcul spécialisée, qui soit plus rapide que le procédé connu, notamment par le fait que des tests de signe ou de grandeur de variables de calcul, seraient rendus beaucoup moins fréquents.

A cet effet, le procédé de mise en oeuvre de la méthode de codage RSA selon la présente invention est caractérisé en ce que l'on effectue une quasi-réduction de la longueur de Bi en fixant les variables R et q pour que la variable T contienne un faible multiple du module N, le reste R étant non-négatif et égal aux n bits de poids faible du résultat de l'étape d'accumulation et le quotient q étant égal à un quotient entier dans un format à p bits fixé avec p>m, d'une division approchée de Bi par N, en ce que l'on se fixe un nombre donné d'itérations et une tolérance d'approximation du quotient q tels que le dépassement du format à n bits accumulé par la variable de totalisation T lors desdites étapes soit au plus égal à p-m et en ce que l'on effectue une étape supplémentaire de quasi-réduction modulo N à la suite dudit nombre donné d'itérations qui produit une nouvelle valeur à la variable A strictement dans le format à n bits.

La réduction modulo N de la longueur de la variable Bi étant ainsi incomplète, la variable T équivalente à Bi ne peut en aucun cas avoir un signe négatif et donc il n'est pas nécessaire de tester la valeur du signe T.

Le traitement peut ainsi être exécuté de manière systématique et sans interruption, au moins durant une certain nombre d'opérations successives au-delà desquelles on pourrait courir le risque que l'accumulation du dépassement ne puisse plus être prise en compte dans le format à p bits du quotient q.

En effet, le fait d'utiliser une valeur de quotient approché q conduit à la possibilité d'une réduction modulo incomplète qui est susceptible de fournir un résultat T dont le nombre de bits dépasse le format à n bits fixé au départ. C'est pourquoi on a choisi un format pour le quotient approché q, de p bits, qui est plus élevé que le format à m bits utilisé pour le multiplicateur $a_i$ dans l'opération $a_i.X$.

Selon une caractéristique de l'invention, le nombre prédéterminé d'itérations exécutées en laissant au dépassement de la variable T la possibilité de s'accroître est avantageusement choisi égal au nombre de multiplications $a_i.X$ suivies de leurs quasi-réductions modulo N, qui sont nécessaires pour épuiser la variable A à l'aide de ses tranches successives $a_i$. Ce nombre correspond à l'entier supérieur du rapport n/m.

La valeur du quotient approché q, possédant le degré de précision recherché, peut être déterminée, selon l'invention, de plusieurs manières.

Un premier mode de mise en oeuvre de l'invention, dans lequel la valeur du module N est prise dans un intervalle particulier, est caractérisé en ce que ledit intervalle particulier est égal à :

$$2^n - 2^{(n-m)} \text{ à } 2^n - 1$$

et en ce que la valeur du quotient approché q est fournie par les bits des poids forts de la variable $B_i$ qui dépassent du format à n bits.

Selon ce mode de mise en oeuvre, la valeur du quotient approché q est trouvée immédiatement et peut être recyclée dans l'organe de traitement spécialisé, en tant qu'opérande pour la réduction modulo N sans même transiter par une mémoire de données. L'emplacement mémoire correspondant peut donc être économisé.

Lorsque ce mode de mise en oeuvre est appliqué à des variables à n bits où n est inférieur à 2000, on choisit avantageusement un nombre de bits p du quotient approché q égal à 32 et un nombre de bits m dudit format réduit de la variable $a_i$ égal à 24.

Ces nombres de bits sont des multiples de 8, et sont bien adaptés à un microcontrôleur travaillant par mots de 8 bits auquel est associée une cellule de calcul travaillant également sur des opérandes à 8 bits. La valeur de p-m est égale à 8 bits (soit un octet) permettant de recevoir le cumul de dépassement consécutif à une réduction modulo N éventuellement incomplète jusqu'à ce qu'une réduction supplémentaire ne soit exécutée.

En restreignant l'intervalle dans lequel la valeur du module N est choisie, on pourrait également augmenter le nombre d'opérations enchaînées successivement avant qu'une quasi-réduction modulo supplémentaire ne devienne nécessaire.

Inversement, on pourrait également élargir l'intervalle dans lequel on choisit la valeur du module N à la condition de réduire de façon corrélative le nombre d'opérations successives qui sont enchaînées sans réduction modulo supplémentaire.

Le procédé selon l'invention s'applique également lorsque la valeur du module N est choisie de manière quelconque parmi les nombres à n bits.

En effet, un deuxième mode de mise en oeuvre de l'invention, qui s'applique dans un tel cas, pour des variables à n bits où n est inférieur à 2000, est caractérisé en ce que l'on choisit un nombre de bits p du quotient approché q égal à 32 et un nombre de bits m des tranches $a_i$, égal à 24, en ce qu'après avoir effectué la première opération :

$$B_i = a_i.X + T.2^m$$

on détermine la valeur du quotient approché q par une étape supplémentaire de multiplication des bits de poids forts de la variable Bi qui dépassent du format à n bits par l'inverse du module N limité à ses 56 bits les plus significatifs. Le résultat, limité à ses 32 bits les plus significatifs, étant placé sous la variable q.

La valeur du quotient approché q se trouve déterminée à la suite d'une petite opération supplémentaire (multiplication de deux nombres, l'un de 4 octets et l'autre de 7 octets), qui est du même type que l'opération de réduction modulo N mais beaucoup plus courte puisque le multiplicande n'est que de 7 octets. Avec la facilité de pouvoir choisir pour N un nombre quelconque et non pas dans un intervalle déterminé comme dans le premier mode de mise en oeuvre, on allonge la durée du traitement, seulement d'environ 15 %.

D'autres caractéristiques, détails et avantages de l'invention seront mis en évidence à l'aide de la description qui va suivre en regard des dessins annexés dans lesquels :

- la figure 1 représente un algorithme de calcul de l'exponentiation par e d'un mot M à n bits, où e est également un nombre à n bits,
- la figure 2 représente un algorithme déduit de celui de la figure 1 permettant d'aboutir à la valeur de $M^e$ modulo N, où N est un module à n bits,
- la figure 3 représente une partie de l'algorithme de la figure 2 dans un développement plus détaillé qui met en jeu le procédé selon l'invention,
- la figure 4 donne un schéma-bloc montrant l'organisation d'un microcontrôleur mettant en oeuvre le procédé selon l'invention, et

- la figure 5 montre une vue schématique d'une cellule de calcul pouvant être incorporée dans le microcontrôleur de la figure 4.

Les procédés dits d'exponentiation binaire consistant à calculer la valeur de $M^e$ sont bien connus. L'un d'eux qui exploite l'exposant e dans un ordre régressif de poids sera rappelé ici très brièvement dans le but de fixer les notations et de faire bien comprendre la hiérarchie des calculs.

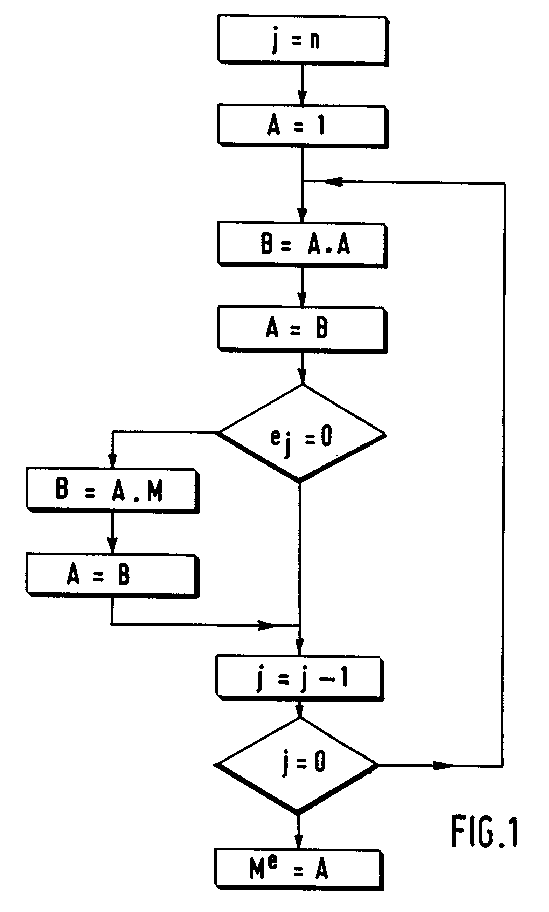

On fixe un indice j = n, où n est égal au nombre de bits de l'exposant e exprimé en binaire, et une variable de calcul A initialisée à la valeur 1. On effectue ensuite une boucle de calcul dans laquelle on réalise le carré de A placé sous la variable B, puis on donne une nouvelle valeur de A = B, après quoi si le bit de l'exposant e au rang j est égal à 1 on effectue une opération supplémentaire consistant à écrire B = A.M dont la valeur de B est remise sous la variable de calcul A alors que si le bit de e au rang j est égal à 0 cette opération est omise. Puis on passe au bit juste inférieur de e en faisant j = j-1 après quoi on reboucle les opérations, comme indiqué à la figure 1. Les opérations sont poursuivies tant que j est supérieur à 0. Le bit de poids faible de e est exploité pour j = 1, ce qui revient à dire que lorsque j = 0 le calcul est terminé et la variable de calcul A fournit la valeur de $M^e$.

La méthode de codage RSA consite à effectuer l'exponentiation par un nombre e modulo N d'un message M ; N, e et M étant des nombres entiers de grande longueur compris dans un format à n bits, n pouvant être de l'ordre de 512 bits.

Un premier effet de la fonction modulo N est que le résultat est ramené à un format qui ne dépasse pas n bits. Une autre propriété de la fonction modulo N est que l'on peut choisir le moment où on applique la réduction modulo N sans nuire à l'exactitude du résultat final, ce qui offre l'avantage de réduire la longueur de la variable de calcul avant qu'elle n'atteigne une longueur prohibitive pour un microcontrôleur dont la capacité de calcul et la quantité de mémoires sont très limitées.

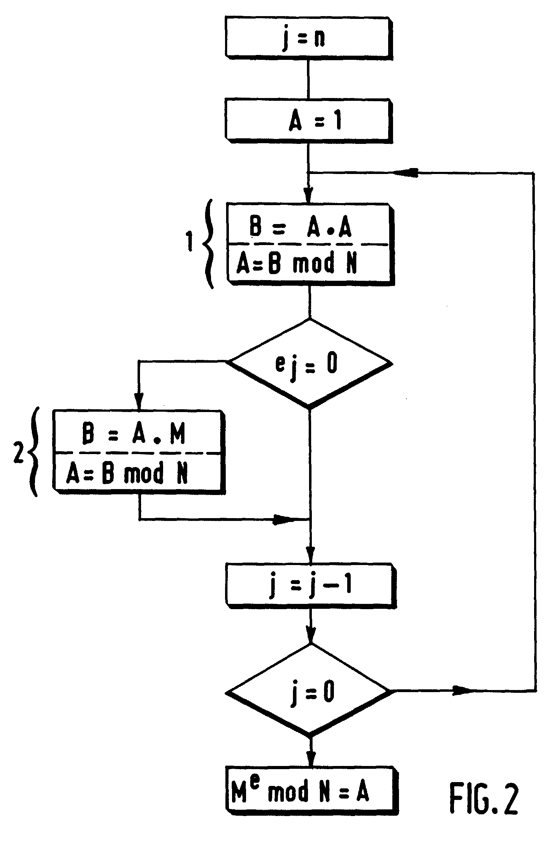

La figure 2 indique comment l'algorithme de la figure 1 peut être modifié pour obtenir l'exponentiation par un nombre e, modulo N, d'un message M. On entre dans le processus de calcul comme précédemment en faisant j = n et A = 1, et on effectue le calcul de B = A.A que l'on peut réduire alors en une nouvelle valeur de la variable de calcul A en faisant A = B modulo N. Lorsque le bit de e pris au rang j est égal à 1, on effectue ensuite B = A.M que l'on réduit encore en posant A = B modulo N. Lorsque le bit de e au rang j est égal à 0 cette double opération est omise. On obtient alors une certaine valeur de la variable A à l'issue de cette étape de calcul, après quoi on effectue j = j-1 et on répète ces opérations en boucle telles qu'indiquées à la figure 2, jusqu'à ce que la variable d'indice j soit égale à 0. Lorsque l'on a épuisé les bits de la variable e, un par un, la variable de calcul A fournit alors la valeur recherchée de $M^e$ modulo N. On peut observer sur la figure 2 que les couples d'opérations indiqués aux repères 1 et 2 sont de nature identique. Pour les opérations de chacun de ces couples d'opérations, la première est du type B = A.X tandis que la seconde est du type A = B modulo N. Comme dans la première opération du type B = A.X, où A et X sont des nombres de grande longueur, il n'est pas possible en général de faire exécuter cette opération directement par un microcontrôleur à faible capacité de calcul. En réalité les couples d'opérations sus-indiqués seront traités par fractions imbriquées entre elles, de manière à ce que la longueur des variables ne progresse pas de beaucoup par rapport au format à n bit.

On va donc maintenant détailler le processus séquentiel permettant d'obtenir un résultat équivalent au couple d'opérations noté 1 ou 2 sur la figure 2.

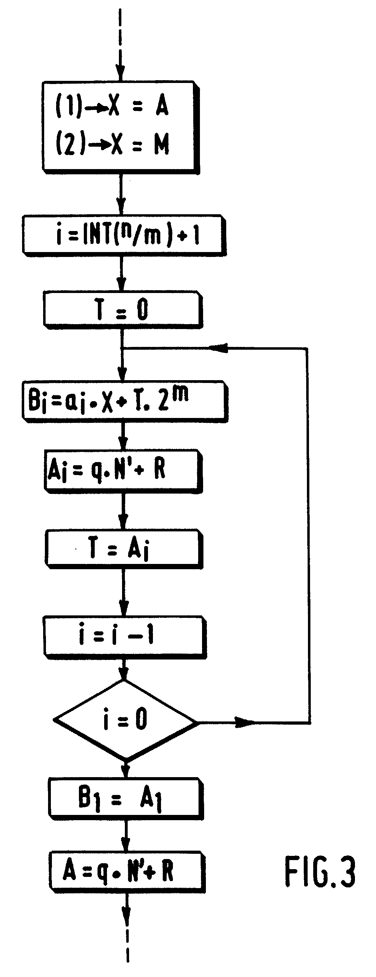

La figure 3 montre un algorithme plus détaillé équivalent aux couples d'opérations 1 et 2 sus-mentionnés. On place sous la variable X une valeur qui est égale soit à A soit à M selon qu'il s'agit d'une opération du type 1 ou du type 2. Sachant que la variable de calcul A va être exploitée par tranches ou extraits à format restreint $a_i$, à m bits, on détermine en conséquence un indice de boucle i dont la valeur est égale à l'entier immédiatement supérieur de la division n/m. On utilise une variable de totalisation T que l'on initialise à O. En partant de la tranche de poids forts correspondant à l'extrait $a_i$ de la variable A, on effectue une boucle de calcul dans laquelle on calcule $B_i = a_i.X + T.2^m$ puis on effectue une réduction de longueur de la variable $B_i$ selon la relation $A_i = q.N' + R$.

Conformément au procédé selon l'invention la valeur actuelle de la variable $A_i$ est un équivalent de la variable $B_i$ mais à laquelle on a soustrait un multiple déterminé du module N, c'est donc un équivalent de la variable $B_i$ de longueur réduite. Cette opération s'apparente à la fonction modulo N mais du fait que cette réduction peut être incomplète elle a été appelée précédemment opération de quasi-réduction modulo N, puisque la variable $A_i$ est susceptible de contenir un faible multiple du module N. On fixe une variable R dont la valeur est fournie par les n bits de poids faibles de la variable $B_i$, et q un quotient approché par défaut de la division $B_i/N$ dans un format à p bits fixé, où p est plus grand que m. La valeur de la variable N' est le complément à deux de N dans le format à n bits. Le terme q.N' est donc un équivalent du terme -q.N. Du fait que la valeur de $A_i$ est susceptible de contenir encore un faible multiple du module N (contrairement à l'opération stricte de réduction modulo N), ce résultat $A_i$ est donc susceptible de présenter un dépassement de d bits de poids forts par rapport au format à n bits. C'est pourquoi on a choisi un format pour la variable q à p bits, le nombre p étant supérieur au nombre m de manière à pouvoir contenir le dépassement d en question.

On affecte à la variable T la valeur actuelle de la

variable $A_i$ après quoi on diminue d'une unité l'indice de boucle i et l'on répète l'opération dans la boucle indiquée à la figure 3 jusqu'à ce que le dernier extrait $a_i$, de poids faible, ait été exploité. On se fixe un nombre donné d'opérations successives dans la boucle indiquée à la figure 3 ainsi qu'une tolérance d'approximation de q tels que le nombre de bits d du dépassement accumulé lors desdites opérations successives soit au plus égal à p-m. Dans l'exemple représenté à la figure 3, ledit nombre d'opérations successives est égal à i, ce qui fixe du même coup la tolérance d'approximation de q. A l'issue des i calculs en boucle le dernier résultat $A_i$ devient le résultat $A_1$ que l'on place sous la variable $B_1$. On effectue ensuite une quasi-réduction modulo N supplémentaire identique à celle qui est pratiquée à l'intérieur de la boucle de calcul, et qui produit une nouvelle valeur de la variable de calcul A, en effectuant l'opération $A = q.N' + R$ expression dans laquelle les variables ont la même signification que précédemment et produisent une réduction de longueur de la variable $B_1$. Cela fait disparaître tout dépassement et ramène cette variable dans un format à n bits. Dans l'algorithme représenté à la figure 3 on a fait figurer une condition i = 0. En réalité il ne s'agit pas ici d'un test à proprement parler (au sens informatique du terme), car en pratique on a lancé le dispositif de calcul dans l'exécution de l'algorithme de la figure 3 en lui précisant le nombre i de boucles d'opérations à effectuer. En définitive, cet algorithme ne présente aucun test de signe ni de grandeur et est effectué de manière systématique par un organe de calcul spécialisé, comme on le verra plus loin, sans qu'il soit nécessaire d'effectuer une interruption sous les ordres de l'unité centrale du microcalculateur.

La valeur du quotient approché q doué du degré de précision requis, peut être déterminée de plusieurs manières.

Un premier mode de mise en oeuvre de l'invention dans lequel la valeur du module N est prise dans un intervalle particulier se caractérise par le fait que cet intervalle particulier est égal à :

$$2^n - 2^{(n-m)} \text{ à } 2^n - 1$$

et en ce que la valeur du quotient approché q est fournie par les bits de poids forts de la variable $B_i$ qui dépassent du format à n bits.

Selon un exemple avantageux dans lequel n est inférieur à 2000, on choisit un nombre de bits p du quotient approché q qui est égal à 32 et un nombre de bits m du format réduit de la variable $a_i$ qui est égal à 24. On dispose donc de 8 bits (1 octet) pour recueillir le dépassement d susceptible de se produire dans des cas très défavorables au cours du processus de calcul en boucle répété i fois. Il y a lieu de remarquer que dans le calcul $B_i = a_i.X + T.2^n$, le terme $a_i.X$ reste toujours strictement dans un format à (n+m) bits alors que c'est la valeur $T.2^m$ qui peut dépasser un tel format et faire apparaître un dépassement d. Du fait que ce dépassement est créé à l'addition on dispose d'un octet pour recueillir le cumul de ce dépassement durant les i calculs en boucle et par conséquent on dispose du nombre de 255 pour cumuler un tel dépassement. Or, un tel dépassement est généralement d'une valeur de 1 dans un cas défavorable, au pire de 2, et exceptionnellement (mais une seule fois), de 3. Ceci revient à dire que l'on dispose d'un nombre de tours de boucle >100 avant que le dépassement ne puisse plus être contenu dans l'octet qui lui est réservé. A titre indicatif pour des variables de départ pour lesquelles n est égal à 512 bits, le nombre i de calculs en boucle est égal à 22 seulement.

Comme on le verra ci-après les nombres de bits indiqués à titre d'exemple sont des multiples de 8 bits et sont avantageux pour la raison qu'ils sont bien adaptés à un microcontrôleur qui travaille par mots de 8 bits auquel est associée une cellule de calcul travaillant également sur des opérandes à 8 bits.

On a indiqué dans ce qui précède un exemple pour lequel le nombre d'opérations successives effectuées sans avoir recours à une quasi-réduction modulo N supplémentaire est égal à i, c'est-à-dire le nombre d'opérations successives nécessaires pour exploiter la variable A à l'aide de ses extraits successifs $a_i$. On pourrait toutefois opérer différemment par exemple en augmentant la précision du quotient approché q par le choix d'un intervalle du module N plus restreint, ce qui autorise alors à réduire le nombre p-m de bits réservés à accueillir le dépassement de format de la variable de calcul A, ou au contraire en élargissant l'intervalle particulier dans lequel la valeur du module N a été choisie, ce qui conduirait soit à augmenter le nombre de bits p à utiliser pour contenir la variable q soit encore, en conservant une valeur de p égale à 32 bits, à réduire le nombre d'opérations enchaînées successivement (c'est-à-dire à opérer une quasi-réduction modulo N supplémentaire un certain nombre de fois durant les i calculs en boucle). Il est dans tous les cas avantageux, pour conserver un format constant de calcul pour la variable A, de terminer le cycle d'opérations décrit à la figure 3 par une quasi-réduction modulo N supplémentaire qui a pour effet de ramener la valeur de la variable A strictement dans le format à n bits.

Le procédé selon l'invention est d'une mise en oeuvre immédiate lorsque la valeur du module N est prise dans un intervalle particulier. Mais il s'applique également lorsque la valeur du module N est choisie de manière quelconque parmi les nombres à n bits. En effet, selon un deuxième mode de mise en oeuvre de l'invention, on est conduit par une petite opération supplémentaire à déterminer la valeur du quotient approché q possédant la tolérance d'approximation convenable.

Comme les grandeurs des variables de calcul sont généralement corrélées entre elles on va décrire ce mode de mise en oeuvre à l'aide d'un exemple pour lequel ces variables possèdent un format dont la valeur est numériquement fixée. Le nombre de bits n des mots de grande longueur est inférieur à 2000, le nombre de bits p du quotient approché q est égal à 32, le nombre de bits m du format réduit de la variable $a_i$ est égal à 24. Le procédé de calcul schématisé à la figure 3 est encore utilisé de sorte que la première des opérations effectuées en boucle est donnée par $B_i = a_i.X + T.2^m$.

La valeur du quotient approché q ne peut plus être fournie directement par les bits de poids forts de la variable $B_i$ qui dépassent du format à n bits. Le mot $\ell_i$ représenté par ces bits de poids forts dépassant du format à n bits est néanmoins utilisé indirectement après transformation par une petite opération pour fournir la valeur du quotient approché q. Comme on se permet selon l'invention une tolérance d'approximation sur le quotient approché q, la transformation dont il va être question ne requiert pas non plus une précision très grande et peut être effectuée avec un nombre restreint de bits.

Selon ce mode de mise en oeuvre de l'invention on effectue le produit $\ell_i.N^*$ dans lequel $N^*$ est une variable constituée par un nombre binaire limité à ses 56 bits (7 octets) les plus significatifs de l'inverse du module N. La valeur qui résulte de cette multiplication est encore limitée à ses 32 bits (4 octets) les plus significatifs, valeur qui fournit le quotient approché q recherché. A la suite de cette opération on effectue comme précédemment l'opération de réduction de longueur de la variable $B_i$ par une opération $A_i = q.N' + R$, opération dans laquelle les variables ont la même signification que dans le précédent mode de mise en oeuvre.

Il est à noter que la valeur de $N^*$ est un paramètre qui peut être fourni au microcontrôleur au même titre que le module N ou son complément à deux N' de sorte que ce paramètre n'est pas nécessairement calculé par le microcontrôleur lui-même. En définitive avec la facilité que l'on peut choisir maintenant une valeur du module N de valeur quelconque parmi les nombres à n bits, on applique le même procédé que précédemment à l'exception d'une petite opération supplémentaire pour déterminer la valeur du quotient approché q, opération qui est comparativement très courte puisqu'elle fait intervenir une multiplication de deux nombres dont l'un est à un format de 4 octets et l'autre à un format de 7 octets, opération supplémentaire qui n'allonge que d'environ 15 % la durée du traitement par rapport au premier mode de mise en oeuvre dans lequel la valeur du module N était choisie dans un intervalle particulier.

Par rapport à cet exemple dans lequel les formats des variables ont été fixés numériquement, exemple représentant un mode pratique de mise en oeuvre préféré, on comprendra que le spécialiste est à même de fixer d'autres règles concernant la précision de la détermination du quotient approché q telles que la quasi-réduction modulo N soit effectuée de la manière indiquée, de manière systématique, et sans test pendant un nombre prédéterminé d'opérations successives après quoi une opération de quasi-réduction modulo N supplémentaire est appliquée de manière à supprimer le dépassement accumulé au cours de ces opérations successives.

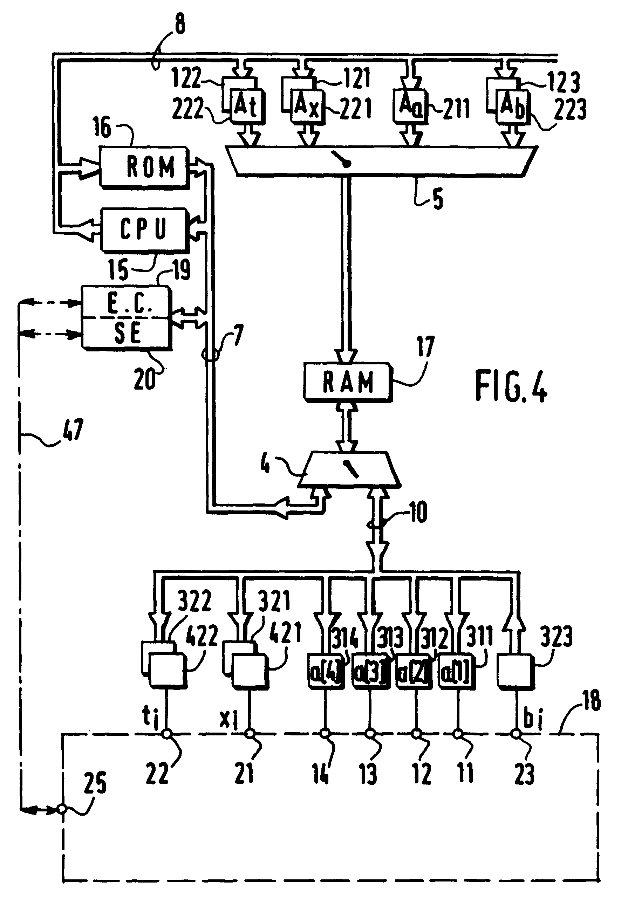

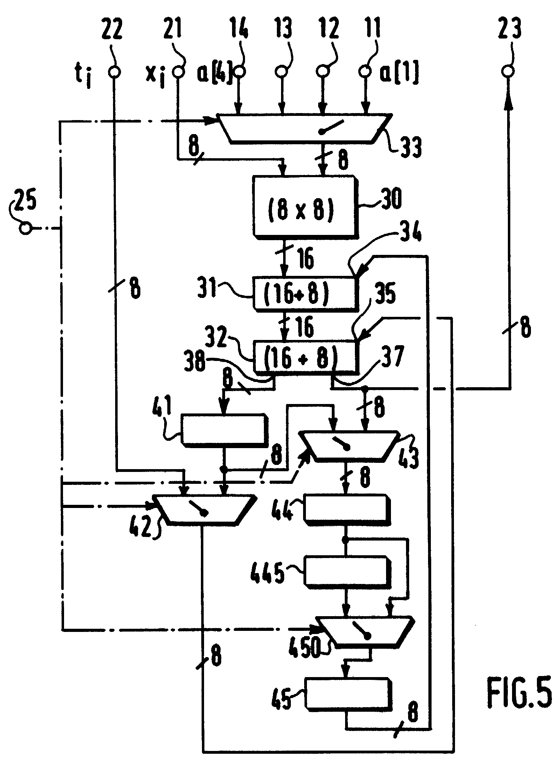

A l'aide des figures 4 et 5, on va maintenant décrire brièvement un exemple de microcontrôleur permettant une mise en oeuvre avantageuse et très efficace du procédé selon l'invention et un exemple d'une cellule de calcul pouvant être incorporée dans un tel microcontrôleur. Il est à noter que ces dispositifs font, en eux-mêmes, respectivement l'objet des demandes de brevet européen N° 90 203410.7 et 90 203412.3 déposées le 18 décembre 1990, demandes de brevets dans lesquelles ces dispositifs sont décrits avec plus de détails.

Le microcontrôleur représenté schématiquement à la figure 4 comporte une unité centrale (CPU) 15, une mémoire de programme (ROM) 16, une mémoire de travail (RAM) 17, une cellule de calcul symbolisée par le rectangle en trait interrompu 18, ainsi qu'une unité de registres état et commandes (E.C.) 19 et un séquenceur (SE) 20. L'unité centrale 15 échange des données avec la mémoire de programme 16, l'unité de registres d'état et commandes 19, le séquenceur 20 au moyen d'un bus de données 7 et émet des valeurs d'adresses à la mémoire de programme 16 au moyen d'un bus d'adresses 8. L'unité centrale 15 peut également échanger des données et des adresses via les bus respectifs 7 et 8 avec la mémoire de travail 17 mais les accès à la mémoire de travail 17 ne sont pas directs.

Le bus de données 7 qui est lié à l'unité centrale 15 accède au port de données de la mémoire de travail 17 via une première entrée d'un multiplexeur de commutation de données 4, dont la deuxième entrée communique avec un bus dit "local" 10 dont le rôle sera expliqué ultérieurement. Le port d'adresses de la mémoire de travail 17 est relié à la sortie d'un autre multiplexeur dit de commutation d'adresses 5 dont quatre entrées sont reliées au bus d'adresses 8, respectivement : pour la première entrée, via un registre double 122-222 d'adresses pour un opérande t, registre double qui est arrangé en file d'attente série, pour la deuxième entrée, via un autre registre double 121-221 également arrangé en file d'attente série pour l'adresse d'un opérande x, pour la troisième entrée, via un registre simple 211 pour l'adresse d'un opérande a [] et enfin, pour la quatrième entrée, via un autre registre double 123-223 pour l'adresse d'un résultat d'opération b. Les registres pointeurs d'adresses 122, 121, 211, 123 peuvent être chargés par l'unité centrale 15 tandis que les registres pointeurs 222, 221 et 223 sont conçus pour recevoir les valeurs d'adresses de leurs registres homologues dans chacune des files d'attente correspondantes et sont susceptibles ensuite d'être incrémentés ou décrémentés automatiquement par le séquenceur 20. Le registre pointeur simple 211 peut également, après chargement par l'unité centale 15, être incrémenté ou décrémenté automatiquement par le séquenceur 20.

La cellule de calcul 18 possède quatre entrées 11, 12, 13 et 14 pour des opérandes a[1], a[2], a[3] et a[4] ainsi que des entrées 21 et 22 pour des opérandes respectivement $x_i$ et $t_i$. Entre le bus local 10 et les entrées d'opérande 11, 12, 13, 14 sont interposés des registres respectivement 311, 312, 313 et 314 dans lesquels la valeur des opérandes mentionnés est stockée. Entre l'entrée 21 de l'opérande $x_i$ et le bus local 10 est interposée une paire de registres 321-421 arrangés en file d'attente série, de même qu'entre l'entrée 22 de l'opérande $t_i$ et le bus local 10 est interposée une paire de registres 322-422 arrangés en file d'attente. La cellule de calcul 18 possède encore une sortie 23 pour un résultat $b_i$ qui transite vers le bus local 10 via un registre de sortie 323. Pour la clarté de la figure, le détail des liaisons de commande n'a pas été représenté. Toutefois un ensemble de liaisons de commande 47 représenté en traits mixtes, figure de manière symbolique les liaisons de commande entre l'unité de registre état et commandes 19, le séquenceur 20 et la cellule de calcul 18 laquelle reçoit ces commandes sur un port 25.

La particularité du microcontrôleur représenté à la figure 4 réside principalement dans le fait que, grâce au bus local 10, des données peuvent transiter, via le multiplexeur de commutation de données 4, entre la mémoire de travail 17 et les ports de données de la cellule de calcul 18, et ainsi cette cellule peut effectuer une série de calculs sous la commande du séquenceur 20 sans intervention de l'unité centrale 15. Pendant cette série d'opérations l'unité centrale est à même de recharger les pointeurs d'adresses dans les registres pointeurs 121, 122 et 123 en vue d'une série de calculs ultérieurs.

Dans un exemple pratique de mise en oeuvre du procédé selon l'invention, toutes les données traitées se présentent sous un format uniforme à 8 bits. Les variables de calcul T et X sont découpées par mots de 8 bits qui, à un rang de poids i constituent les opérandes $x_i$ et $t_i$. Pour un couple de valeurs $x_i$, $t_i$ donné, ces valeurs sont d'abord chargées en deux cycles d'horloge dans les registres 321 et 322 via le bus local 10. Un troisième cycle d'horloge est utilisé pour inscrire dans la mémoire de travail 17 un résultat $b_i$ stocké dans le registre 323. La cellule de calcul 18 peut fonctionner par cycle à 4 pas utilisant les opérandes a[1] à a[4] ou encore par cycle à 3 pas, l'opérande a[4] n'étant pas utilisé et l'entrée 14 non utilisée.

Pour effectuer une opération du type $B_i = a_i.X + T$ on utilise un fonctionnement de la cellule de calcul 18 à cycle à 3 pas, les opérandes a[1] à a[3] représentant trois octets successifs formant ensemble les trois octets de la variable $a_i$. Comme on le verra par la suite, la cellule de calcul 18 est susceptible de fournir un unique résultat $b_i$ à la suite du cycle de calcul à 3 pas revenant à effectuer l'opération $a_i.x_i + t_i$. Durant le cycle d'horloge pendant lequel un résultat $b_i$ est transféré à partir du registre 323 dans la mémoire de travail 17, de nouvelles valeurs des opérandes $x_i$ et $t_i$ sont transférées simultanément des registres respectifs 321 et 322 vers des registres correspondants 421 et 422. Chacune des variables de calcul T, X, et $B_i$ étant stockée dans la mémoire de travail 17 par octets d'adresses consécutives, ces adresses sont pointées par les registres pointeurs respectifs 221, 222 et 223 par incrémentation ou décrémentation sous la commande du séquenceur 20.

Lorsqu'on on effectue une opération de quasi-réduction modulo N correspondant à la relation $A_i = q.N' + R$, à l'entrée 21 l'opérande $x_i$ est remplacé par un octet $n'_i$ du paramètre N' pris au rang i, à l'entrée 22 l'opérande $t_i$ est remplacé par un octet $r_i$ tiré de la variable R, et aux quatre entrées 11, 12, 13, 14 sont appliqués les 4 octets successifs formant ensemble le quotient approché q. La cellule de calcul 18 fonctionne alors à 4 pas effectuant cycliquement le traitement de chacun des octets formant ensemble le quotient q pour un couple de valeurs $n'_i$ et $r_i$. Un calcul est effectué à chaque pas du cycle à 4 pas tandis que le bus local 10 est à nouveau occupé pour la durée de deux cycles d'horloge pour le rechargement des données d'opérande dans les registres 321 et 322 plus un cycle d'horloge pour le transfert du résultat à partir du registre 323 vers la mémoire de travail 17. Dans ce cas le bus local 10 reste inoccupé pendant un cycle d'horloge sur les 4 qui forment un cycle de calcul.

Pour un format de variables de départ N, M, à 512 bits c'est-à-dire 64 octets, il faudra effectuer 67 cycles à 3 pas pour exploiter entièrement et par octets les variables X et T permettant d'obtenir un résultat $B_i$. De manière semblable il faudra 68 cycles à 4 pas pour exploiter entièrement et par octets les variables N' et R (y compris le "vidage" des données intermédiaires stockées dans la cellules de calcul) dans l'opération de quasi-réduction modulo N fournissant la variable de calcul $A_i$. Durant le temps correspondant à ces séries de cycles pendant lequel la cellule de calcul travaille de manière quasiment autonome, l'unité centrale 15 dispose de tout le temps nécessaire pour recharger les différents paramètres nécessaires aux calculs qui vont suivre et notamment les adresses dans les registres pointeurs 121, 122 et 123. D'une manière similaire entre deux séries de cycles de calcul de nouveaux opérandes a[1], a[2], a[3] -et le cas échéant un opérande a[4]- sont rechargés dans les registres 311 à 313 (314) à partir d'une adresse initiale chargée par l'unité centrale dans le registre pointeur 211 qui est ensuite décrémenté ou incrémenté pour fournir les valeurs suivantes de ces opérandes à partir de la mémoire de travail 17. Une variante de réalisation non représentée à la figure 4 consiste à ajouter au registre de données 323 recevant la sortie de résultat $b_i$, une pile de trois registres tampons court-cuircuitables au moyen d'un multiplexeur. Les 4 octets de poids fort de la variable $B_i$ produits en dernier lieu par la cellule de calcul 18 peuvent alors, à partir des 3 registres tampons de ladite pile augmentés du registre 323, être transférés directement et successivement dans les registres 311, 312, 313 et 314 en tant qu'opérandes pour la mise en oeuvre d'une quasi-réduction modulo N qui va suivre. De cette manière l'emplacement mémoire représenté par ces 4 octets de données peut être économisé.

La figure 5 indique le schéma interne d'une cellule de calcul 18 de la figure 4. Les entrées et sorties de la cellule de calcul sont affectées des mêmes signes de référence qu'à la figure 4. Les entrées de données 11 à 14 sont appliquées à 4 entrées d'un multiplexeur à commutation cyclique 33 dont la sortie est appliquée à une des deux entrées d'un multiplieur 30 de 8 x 8 bits. A la deuxième entrée du même multiplieur est appliqué l'opérande $x_i$ à partir de l'entrée 21. La sortie du multiplieur 30 au format de 16 bits est appliquée sur l'une des deux entrées d'un premier additionneur 31 tandis qu'une deuxième entrée au format de 8 bits provient de moyens de recyclage de données qui seront décrits ci-après. La sortie au format de 16 bits du premier additionneur 31 est appliquée à l'une des deux entrées d'un deuxième additionneur 32, de 16+8 bits, dont la deuxième entrée 35 peut recevoir la valeur de l'opérande $t_i$ à partir de l'entrée 22 via un multiplexeur 42. Le deuxième additionneur 32 possède deux sorties : une sortie 37 des 8 bits de poids faibles du résultat susceptible de contenir une donnée de résultat à transmettre sur la sortie 23 et une sortie 38 des 8 bits de poids forts qui sont mémorisés dans un registre tampon 41. La sortie du registre tampon 41 est appliquée d'une part à la deuxième entrée du multiplexeur 42 et d'autre part à l'une des deux entrées d'un autre multiplexeur 43 l'autre entrée à 8 bits de cet autre multiplexeur étant reliée à la sortie 37 des poids faibles de résultat. La sortie à 8 bits du multiplexeur 43 et reliée à la deuxième entrée 34 du premier additionneur 31 via une pile de registres tampons 44, 445, 45, l'un des registres de cette pile (ici le registre 445) pouvant être évité au moyen d'un multiplexeur 450 dit de court-circuit. Les données transitent pas à pas dans cette pile de registres.

Au premier pas d'un cycle correspondant à la sélection de l'opérande a[1] le multiplexeur 42 est positionné pour sélectionner l'entrée d'opérande $t_i$ et le multiplexeur 43, positionné pour sélectionner la sortie du registre tampon 41. Ces positionnements sont ceux qui ont été indiqué de manière symbolique sur la figure 5. L'opérande $t_i$ est présenté à l'addition dans le deuxième additionneur 32 et le résultat des 8 bits de poids faible en sortie 37 de cet additionneur est mémorisé via la borne de sortie 23 dans le registre 323 (figure 4). Pour les autres pas c'est-à-dire les pas différents d'un premier pas de cycle, le positionnement des multiplexeurs 42 et 43 est inversé de sorte que les valeurs de poids forts des résultats en sortie 38 du deuxième additionneur 32 sont recyclées à l'addition sur l'entrée 35 du deuxième additionneur 32 après un retard correspondant au stationnement de ces valeurs dans le registre tampon 41. Les 8 bits de poids faibles à la sortie 37 de résultat du deuxième additionneur 32 sont transférés dans le registre 44 constituant la tête de la pile de registre de stockage où les valeurs sont successivement transférées dans le registre qui suit à chaque pas. Un retard convenable de 3 pas est donc assuré pour le recyclage de ces valeurs à l'addition dans le premier additionneur 31 sur l'entrée 34 de cet additionneur. Par exception, au dernier pas d'un cycle c'est la valeur contenue dans le registre tampon 41 qui est transférée lors du premier pas du cycle suivant dans le registre tampon 44 et procure ainsi pour cette valeur un recyclage après un retard de 4 pas comme il convient, vers l'entrée 34 du premier additionneur 31.

Une telle cellule de calcul fournit ainsi un seul résultat à 8 bits en sortie 23 par cycle de 4 pas, exploitant les opérandes a[1] à a[4] combinés aux opérandes $x_i$ et $t_i$. Des résultats intermédiaires sont recyclés au sein même de cette cellule par les moyens de recyclage constitués essentiellement par les registres 41, 44, 445 et 45 munis de moyens de commutation de recyclage constitués par les multiplexeurs 42 et 43.

Une telle cellule est également capable de fonctionner en cycle à 3 pas. Dans ce cas une information, sous la forme d'1 bit particulier, chargée par l'unité centrale 15 dans le registre état et commandes 19, commande à la cellule de calcul de ne pas utiliser l'opérande a[4] de sorte que la commutation cyclique du multiplexeur 33 se borne à exploiter les opérandes a[1] à a[3]. Pour assurer un recyclage convenable des données intermédiaires il est alors nécessaire de réduire d'1 registre la pile de registres tampons 44, 445, 45 ce qui est opéré en positionnant le multiplexeur 450 de court-circuit dans la position qui permet d'éviter le registre 445.

On comprend aisément que le microcontrôleur décrit brièvement à la figure 4 doté d'une cellule de calcul telle que décrite à la figure 5 est capable de mettre en oeuvre le procédé selon l'invention pour un codage par la méthode RSA d'une manière très efficace. En procédant de cette manière, on évite un nombre considérable de tests susceptibles de ralentir de manière très significative l'opération de traitement.

L'invention s'étend également à tout dispositif muni d'une unité centrale de microcalculateur commandée par un programme, dispositif dans lequel ce programme met en oeuvre le procédé décrit précédemment.

**Revendications**

1. Procédé de calcul d'une opération du type A.X modulo N, dans un procédé de codage selon une méthode de type RSA pour chiffrer/déchiffrer un message de données numériques M dans un format à n bits par une exponentiation modulo N dudit message, N étant un entier à n bits, décomposée en une suite de telles opérations, où A et X sont des variables de calcul dépendantes du message numérique M, comprenant:

   - une étape préliminaire pour initialiser une variable de totalisation T et fractionner la variable de calcul A en tranches ai de m bits, prises dans l'ordre décroissant de poids de A, i servant d'indice d'itération dans les étapes suivantes,
   - une étape d'accumulation où l'on place sous une variable Bi le produit de la tranche ai par la variable de calcul X ajouté à la variable de totalisation T cadrée par le facteur 2 exp(m),

- une étape de réduction modulo N pour réduire d'un multiple de N la longueur de la variable Bi par application d'un quotient q, laissant un reste R, le résultat étant placé sous la variable T,

caractérisé en ce que l'on effectue une quasi-réduction de la longueur de Bi en fixant les variables R et q pour que la variable T contienne un faible multiple du module N, le reste R étant non-négatif et égal aux n bits de poids faible du résultat de l'étape d'accumulation et le quotient q étant égal à un quotient entier dans un format à p bits fixé avec p>m, d'une division approchée de Bi par N, en ce que l'on se fixe un nombre donné d'itérations et une tolérance d'approximation du quotient q tels que le dépassement du format à n bits accumulé par la variable de totalisation T lors desdites étapes soit au plus égal à p-m et en ce que l'on effectue une étape supplémentaire de quasi-réduction modulo N à la suite dudit nombre donné d'itérations qui produit une nouvelle valeur à la variable A strictement dans le format à n bits.

2. Procédé de calcul selon la revendication 1, caractérisé en ce que ledit nombre donné d'itérations est atteint lorsque toutes les tranches ai de la variable A ont été exploitées.

3. Procédé de calcul selon la revendication 2, dans lequel la valeur du module N est prise dans un intervalle particulier, caractérisé en ce que ledit intervalle particulier est égal à :

$$2 \exp(n) - 2 \exp(n-m) \text{ à } 2 \exp(n) - 1$$

4. Procédé de calcul selon la revendication 3, caractérisé en ce que le quotient q est fourni par les bits des poids forts de la variable Bi qui dépassent du format à n bits.

5. Procédé de calcul selon l'une des revendications 1 à 4 appliqué à des variables à n bits où n est inférieur à 2000, caractérisé en ce que le nombre de bits p du quotient q est égal à 32 et le nombre de bits m des tranches ai est égal à 24.

6. Procédé de calcul selon la revendication 5, caractérisé en ce que le quotient q est le résultat, limité à ses 32 bits les plus significatifs, d'une étape supplémentaire de multiplication des bits de poids forts de la variable Bi qui dépassent du format à n bits par l'inverse du module N limité à ses 56 bits les plus significatifs.

**Patentansprüche**

1. Verfahren zum Berechnen einer Operation vom Typ A.X modulo N in einem Codierverfahren gemäß einer RSA-Methode zum Verschlüsseln/Entschlüsseln einer numerischen Datennachricht in einem Format von n Bits durch eine modulo N Potenzierung der Nachricht, worin N eine Ganzzahl von n Bits ist, die in eine Folge derartiger Operationen aufgeteilt ist, worin A und X von der numerischen Nachricht M abhängige Berechnungsvariablen mit folgenden Schritten sind:

- eine Vorstufe zum Einleiten einer Summierungsvariablen T und zum Aufgliedern der Berechnungsvariablen A in Abschnitte ai von je m Bits, genommen in der absteigenden Wertreihenfolge von A, wobei i als Iterationsindex in den folgenden Stufen dient,

- eine Akkumulationsstufe, in der das Produkt des Abschnitts ai von der der Summierungsvariablen T vom Faktor 2 exp(m) zugefügten Berechnungsvariablen X einer Variablen Bi zugeordnet wird,

- eine modulo N Reduktionsstufe zum Reduzieren der Länge der Variablen Bi durch Anlegen eines Quotienten q um ein Vielzahl von N, wobei ein Rest R übrigbleibt und das Ergebnis der Variablen T zugeordnet wird, <u>dadurch gekennzeichnet</u>, daß eine Quasi-Reduktion der Länge von Bi durch Bestimmung der Variablen R und q ausgeführt wird, indem die Variable T ein geringes Vielfaches des Moduls N enthält, wobei der Rest nichtnegativ ist und gleich n unbedeutsamen Bits des Ergebnisses des Akkumulationsschritts, und der Quotient q gleich einem ganzen Quotienten in einem Format von mit p > m bestimmten p Bits ist, dem Quotienten einer von Bi über N angenäherten Teilung, und daß eine vorgegebene Iterationszahl und eine Annäherungstoleranz des Quotienten q derart bestimmt werden, daß die Überschreitung des Formats von n Bits, erhöht mit der Summierungsvariablen T während der Programmschritte höchstens gleich p-m ist, und daß ein zusätzlicher Programmschritt der Quasi-Reduktion modulo N in der Folge der vorgegebenen Iterationszahl durchgeführt wird, der einen neuen Wert der Variablen A unbedingt im Format von n Bits erzeugt.

2. Berechnungsverfahren nach Anspruch 1, <u>dadurch gekennzeichnet</u>, daß die vorgegebene Iterationszahl erreicht wird, wenn alle Abschnitte ai der Variablen A benutzt sind.

3. Berechnungsverfahren nach Anspruch 2, mit dem der Wert des Moduls N in einem besonderen Intervall genommen wird, dadurch gekennzeichnet, daß das besondere Intervall gleich $2^n - 2^{n-m}$ ; $2^n-1$ ist.

4. Berechnungsverfahren nach Anspruch 3, dadurch gekennzeichnet, daß der Quotient q von den bedeutsamsten Bits der Variablen Bi geliefert wird, die das Format von n Bits übersteigen.

5. Berechnungsverfahren nach einem oder mehreren der Ansprüche 1 bis 4, durchgeführt an die Variablen von n Bits, worin n niedriger als 2000 ist, dadurch gekennzeichnet, daß eine Zahl von Bits p des angenäherten Quotienten q gleich 32 und eine Zahl von Bits m mit dem reduzierten Format der Abschnitte $a_i$ gleich 24 sind.

6. Berechnungsverfahren nach Anspruch 5, dadurch gekennzeichnet, daß mit einer Beschränkung auf seine 32 bedeutsamsten Bits der Quotient q das Ergebnis einer zusätzlichen Multiplikationsstufe der bedeutsamsten der Variablen Bi ist, die das auf seine 56 bedeutsamsten Bits beschränkte Format von n Bits durch die Umkehrung des Moduls N überschreiten.

## Claims

1. A method of calculating an operation of the type A. X modulo N in a coding method in accordance with an RSA procedure for coding/decoding a message M of digital data in a format of n bits via a modulo-N exponentiation of said message, N being an n-bit integer broken down into a sequence of such operations, where A and X are calculation variables depending on the digital message M, comprising:

   - a preliminary step for initializing a summing variable T and subdividing the calculation variable A into extracts ai of m bits, taken in the decreasing order of weight A, where i serves as an iteration index in the next steps,
   - an accumulation step where the product of the extract ai is placed under a variable Bi via the calculation variable X added to the summing variable T tallying with the factor $2 \exp(m)$,
   - a modulo-N reduction step for reducing by a multiple of N the length of the variable Bi by applying a quotient q, leaving a remainder R while the result is placed under the variable T,

   characterized in that a quasi-reduction of the length of Bi is effected by fixing the variables R and q so that the variable T contains a low multiple of the modulus N, while the remainder R is non-negative and equal to n bits of minor significance of the result of the accumulation step and the quotient q is equal to an integer quotient in a fixed format of p bits, with p > m, of an approximated division of Bi by N and in that a given number of iterations is fixed as is an approximation tolerance of the quotient q so that the transgression of the n-bit format accumulated by the summing variable T during said steps is at most equal to p-m and in that an additional quasi-reduction modulo-N step is carried out at the end of said given number of iterations which produces a new value for the variable A strictly in the format of n bits.

2. A calculation method as claimed in claim 1, characterized in that said given number of iterations is reached when all the extracts ai of the variable A have been used.

3. A calculation method as claimed in claim 2, in which the value of the modulus N is taken in a particular interval, characterized in that said particular interval is equal to:

$$2 \exp(n) - 2 \exp(n-m) \text{ to } 2 \exp(n) - 1$$

4. A calculation method as claimed in claim 3, characterized in that the quotient q is produced by the most significant bits of the variable Bi which exceed the n-bit format.

5. A calculation method as claimed in one of the claims 1 to 4, applied to n-bit variables where n is less than 2000, characterized in that a number of bits p of the quotient q is equal to 32 and a number of bits m of the extracts ai is equal to 24.

6. A calculation method as claimed in claim 5, characterized in that the quotient q is the result, limited to its 32 most significant bits, of an additional multiplication step of the most significant bits of the variable Bi which exceed the n-bit format by the inverse of the modulus N limited to its 56 most significant bits.

FIG.1

FIG.2

FIG.3

FIG.4

14

FIG.5